# EUROPÄISCHE PATENTANMELDUNG

(11) **EP 0 718 904 A1**
(43) Veröffentlichungstag der Anmeldung: **26.06.1996**
(21) Anmeldenummer: 95119516.3
(22) Anmeldetag: 11.12.1995
(51) Int. Cl.: H01M 8/18, H01M 8/06

(54) **Brennstoffzellensystem**

(30) Priorität: 22.12.1994 DE 4446044; 07.09.1995 DE 19533097
(71) Anmelder: SIEMENS AKTIENGESELLSCHAFT, D-80333 München (DE)
(72) Erfinder: Ruthrof, Klaus, Dipl.-Ing., D-90491 Nürnberg (DE); Suchy, Peter, Dipl.-Ing., D-91054 Erlangen (DE)

(57) **Zusammenfassung**

Die Erfindung betrifft ein Brennstoffzellensystem mit einem Elektrolyseur (2), dessen Wasserstoff abgebende Seite mit einer Brennstoffzelle (8) verbunden ist. Es ist vorgesehen, daß die Brennstoffzelle (8) eine Niedertemperatur-Polymer-Elektrolytmembrane-Brennstoffzelle (PEM) ist und daß der Elektrolyseur (2) eine umgekehrt betriebene Niedertemperatur-Polymer-Elektrolytmembrane-Brennstoffzelle (PEM) ist. Beispielsweise ist die Wasserstoff abgebende Seite des Elektrolyseurs (2) über einen Wasserstoffspeicher (7), der ein Metallhydridspeicher sein kann, mit der Brennstoffzelle (8) verbunden. Das Brennstoffzellensystem kann in der Nähe des atmosphärischen Druckes (Umgebungsdruck) betrieben werden.

## Beschreibung

Die Erfindung betrifft ein Brennstoffzellensystem mit einem Elektrolyseur, dessen Wasserstoff abgebende Seite mit einer Brennstoffzelle verbunden ist.

Ein solches System ist aus der DE 38 40 517 A1 bekannt. In diesem System wird mit einer üblichen Elektrolysezelle aus Wasser Sauerstoff und Wasserstoff erzeugt. Die dazu benötigte Energie wird durch ein Kraftwerk bereitgestellt. Der Sauerstoff und der Wasserstoff werden in Sammeleinrichtungen gespeichert und können bei Bedarf einer Brennstoffzelle zugeleitet werden, die elektrische Energie bereitstellt. Diese Brennstoffzelle ist nur bei einer Temperatur, die deutlich hoher als 100 °C ist, zu betreiben. Das wird schon dadurch deutlich, daß ihr Warmeenergie sowohl von einem Blockkraftwerk als auch von einem Wasserstoffbrenner zugeführt werden muß.

Die verwendete handelsübliche Elektrolysezelle enthält einen flüssigen Elektrolyt. Sie ist dadurch nur in einer bestimmten räumlichen Lage zu betreiben.

Die zwischen Elektrolysezelle und Brennstoffzelle angeordneten Speicher für Sauerstoff und Wasserstoff speichern die Gase unter einem hohem Druck, der z.B. ein Mehrfaches des äußeren Atmosphärendrucks ist. Derartige Speicher sind aufwendig, da sie dem hohen Druck standhalten müssen. Sie haben stets ein hohes Gewicht und müssen besonderen Sicherheitsvorschriften genügen.

Der Erfindung lag die Aufgabe zugrunde, ein Brennstoffzellensystem anzugeben, das bei relativ niedriger Temperatur, die z.B. deutlich kleiner als 100 °C ist, betrieben werden kann. Außerdem soll die Brennstoffzelle laufend mit Sauerstoff und Wasserstoff versorgt werden, ohne daß Gase unter hohem Druck gehalten werden müssen, wozu aufwendige und schwere Gasspeicher notwendig wären. Es soll insbesondere eine erneuerbare Quelle für elektrische Energie bereitgestellt werden, die nur wenig Raum einnimmt und anstelle eines Akkumulators zur netzfreien Versorgung eines Verbrauchers eingesetzt werden kann.

Die Aufgabe wird nach der Erfindung dadurch gelöst, daß die Brennstoffzelle eine Niedertemperatur-Polymer-Elektrolytmembrane-Brennstoffzelle (PEM) ist und daß der Elektrolyseur eine umgekehrt betriebene Niedertemperatur-Polymer-Elektrolytmembrane-Brennstoffzelle (PEM) ist.

Damit wird der Vorteil erzielt, daß die Brennstoffzelle keine Zuleitungen für Wärmeenergie benötigt. Darüber hinaus kann die Brennstoffzelle laufend mit Sauerstoff und Wasserstoff versorgt werden, ohne daß Gase unter hohem Druck gehalten werden müssen. Beispielsweise braucht der Umgebungsdruck nicht überschritten zu werden. Schließlich zeichnen sich der Elektrolyseur, wie auch die Brennstoffzelle, dadurch aus, daß sie Feststoffelektrolyten enthalten, die einen weitgehend lageunabhängigen Betrieb gewährleisten.

Die Betriebstemperatur der PEM ist beispielsweise kleiner als 100 °C. Das Brennstoffzellensystem kann dadurch in einfacher Weise benutzt werden. Bei einer Betriebstemperatur, die im Bereich der Umgebungstemperatur liegt, benötigt das System keine Isolierungen und kann trotzdem jederzeit gefahrlos transportiert werden.

Im Elektrolyseur sind beispielsweise Wasser und/oder Wasserdampf (Luftfeuchte) vorhanden oder gespeichert. Es ist dann keine ständige Wasserzuleitung erforderlich. Der gespeicherte Wasservorrat reicht aus, um für eine erste Betriebsphase Wasserstoff und Sauerstoff bereitzustellen, die dann der Brennstoffzelle zur Verfügung stehen. Der Wasservorrat kann danach durch Wasser ergänzt werden, das in der Brennstoffzelle gebildet wird.

Beispielsweise ist im Elektrolyseur ein wasserspeicherndes Medium angeordnet. Damit wird der besondere Vorteil erzielt, daß das gesamte Brennstoffzellensystem lageunabhängig betrieben werden kann, ohne daß Wasser aus dem Elektrolyseur herauslaufen kann. Ein solches wasserspeicherndes Medium kann ein Schwamm oder ein schwammähnlicher Körper sein.

Zur Einleitung von Wasser in den Elektrolyseur kann das wasserspeichernde Medium Dochte aus saugfähigem Material aufweisen. Diese Dochte können Wasser, das von der Brennstoffzelle abgegeben wird, aufnehmen und unabhängig von der Lage des Brennstoffzellensystems in den Elektrolyseur hineinleiten. Dabei wird der Austritt des im Elektrolyseur erzeugten Sauerstoffs nicht behindert, weil sich die Dochte und die Ausgänge für Gase im Elektrolyseur an verschiedenen Positionen befinden.

Der Elektrolyseur ist zur Versorgung mit elektrischer Energie beispielsweise mit einer Solarzellenanlage verbunden. Damit wird der Vorteil erzielt, daß zum Erzeugen von Wasserstoff und Sauerstoff auf photovoltaisch erzeugte elektrische Energie zurückgegriffen werden kann, um dann das System, z.B. bei Dunkelheit, als Spannungsquelle zu nutzen.

Der Elektrolyseur kann jedoch auch an das öffentliche Versorgungsnetz angeschlossen werden (Netzadapter).

Beispielsweise grenzt die Wasserstoff abgebende Seite des Elektrolyseurs an die Wasserstoff aufnehmende Seite der Brennstoffzelle an. Dadurch kann der im Elektrolyseur erzeugte Wasserstoff direkt in die Wasserstoff verbrauchende Brennstoffzelle gelangen. Der Sauerstofftransport vom Elektrolyseur zur Brennstoffzelle muß dann über eine Leitung erfolgen. Insbesondere ist die Brennstoffzelle oberhalb des Elektrolyseurs angeordnet.

Nach einem anderen Beispiel ist die Wasserstoff abgebende Seite des Elektrolyseurs über einen Wasserstoffspeicher, der zur Zwischenspeicherung von Wasserstof dient, mit der Brennstoffzelle verbunden. In dem Wasserstoffspeicher kann der im Elektrolyseur erzeugte Wasserstoff zwischengespeichert werden bis er in der Brennstoffzelle benötigt wird. Es ist jedoch auch möglich, daß die Wasserstoff abgebende Seite des Elektrolyseurs über eine Leitung direkt mit der Brennstoffzelle in Verbindung steht. Falls eine Leitung, die einen Wasserstoffspeicher enthalten kann, für den Transport von Wasserstoff vom Elektrolyseur zur Brennstoffzelle vorhanden ist, können Elektrolyseur und Brennstoffzelle so angeordnet sein, daß die Sauerstoff abgebende Seite des Elektrolyseurs an die Sauerstoff aufnehmende Seite der Brennstoffzelle angrenzt. Dadurch wird vorteilhafterweise Sauerstoff direkt der Brennstoffzelle zugeführt.

Der gegebenenfalls vorhandene Wasserstoffspeicher ist beispielsweise ein Metallhydridspeicher. Ein solcher Wasserstoffspeicher zeichnet sich dadurch aus, daß er in Abhängigkeit von der verwendeten Legierung, die geeignet ausgewählt werden kann, auch in der Nähe des Umgebungsdruckes mit Wasserstoff beschickt werden kann. Die gespeicherte Gasmenge kann so groß sein, daß sie bei Normalbedingungen ein Volumen einnehmen wurde, das erheblich größer als das Eigenvolumen des Speichers, z.B. das 400-500 fache, sein kann. Dies würde einem volumengleichen Druckspeicher mit einem Innendruck bis zu 4.10⁷-5.10⁷Pa (400-500 bar) entsprechen. In Abhängigkeit von der eingesetzten Legierung des Metallhydridspeichers kann dieser in großen Druckbereichen (Unter- wie auch Überdruck) bei weitgehend konstantem Druck arbeiten. Wegen des großen Fassungsvermögens bei kleinem Volumen kann ein mit einem Metallhydridspeicher ausgestattetes Brennstoffzellensystem in einem kleinen Gehäuse untergebracht werden. Das System ist darüber hinaus sehr leicht. Erst dadurch ist vorteilhafterweise möglich, daß das Brennstoffzellensystem als Ersatz für übliche Akkumulatoren und Batterien, unter anderem in elektrischen Kleingeräten, eingesetzt werden kann.

Der Metallhydridspeicher ist beispielsweise mit einer Kühleinrichtung oder mit einer Heizeinrichtung verbunden. Er kann zur Kühlung oder zur Beheizung mit einem Wasservorrat verbunden, z.B. in einem Wasserbad angeordnet sein. Durch eine Kühlung wird die Speicherkapazität des Wasserstoffspeichers erhöht.

In Strömungsrichtung vor dem Wasserstoffspeicher ist beispielsweise ein Trockner angeordnet. Damit wird der Vorteil erzielt, daß den Speicher nur trockener Wasserstoff erreicht, der im Speicher bei gleichem Speichervolumen in größerer Menge als feuchter Wasserstoff abgespeichert werden kann.

In Strömungsrichtung hinter dem Wasserstoffspeicher ist beispielsweise ein Befeuchter angeordnet. Dadurch wird der Betrieb der nachgeordneten Brennstoffzelle verbessert, da diese mit feuchtem Wasserstoff besser arbeitet.

Der Trockner ist beispielsweise mit dem Befeuchter kombiniert, wozu er über eine Leitung mit dem Befeuchter verbunden sein kann. Damit kann vorteilhafterweise das vom Trockner abgegebene Wasser für den Betrieb des Befeuchters verwendet werden. Das vom Trockner abgegebene Wasser kann jedoch auch abgeleitet oder dem Elektrolyseur zugeleitet werden. Auch können der Trockner und der Befeuchter zu einer Einheit kombiniert sein.

Beispielsweise kann die sauerstoffabgebende Seite des Elektrolyseurs über einen Sauerstoffspeicher, der zur Zwischenspeicherung von Sauerstoff dient, mit der Brennstoffzelle verbunden sein. Damit wird sichergestellt, daß durch die Zwischenspeicherung von Sauerstoff der Brennstoffzelle stets ausreichend Sauerstoff zur Verfügung steht.

Falls ein Wasserstoffspeicher und ein Sauerstoffspeicher vorhanden sind, sind diese beispielsweise so ausgebildet, daß der Wasserstoffspeicher ein ca. doppelt so großes Volumen aufnehmen kann wie der Sauerstoffspeicher. Dazu kann der Wasserstoffspeicher doppelt so groß wie der Sauerstoffspeicher sein. Damit wird gewährleistet, daß in der Brennstoffzelle stets ausreichend Wasserstoff und Sauerstoff zur Verfügung stehen, weil doppelt so viel Wasserstoff wie Sauerstoff benötigt wird.

Beispielsweise sind der Elektrolyseur und die Brennstoffzelle von einem gasdichten Gehäuse umgeben, das als Sauerstoffspeicher dient. Der vom Elektrolyseur erzeugte Sauerstoff sammelt sich dann im Gehäuse an und wird bei Bedarf von der Brennstoffzelle aufgenommen. Außer dem im Elektrolyseur erzeugten Sauerstoff befindet sich im Gehäuse der Sauerstoffanteil der im Gehäuse vorhandenen Luft.

Falls sich der Sauerstoff innerhalb des Gehäuses ansammeln kann, ist stets ein separater Wasserstoffspeicher notwendig, der mit der Wasserstoff abgebenden Seite des Elektrolyseurs und der Wasserstoff aufnehmenden Seite der Brennstoffzelle verbunden ist. Der Wasserstoffspeicher ist erforderlich, damit sich im Gehäuse kein Wasserstoff-Sauerstoff-Gemisch bilden kann.

Nach einem anderen Beispiel sind der Elektrolyseur und die Brennstoffzelle von einem mit einem Lufteinlaß versehenen Gehäuse umgeben. Der Lufteinlaß kann darin bestehen, daß das Gehäuse Öffnungen aufweist. Diese Öffnungen dürfen, wenn das Gehäuse Wasser speichern soll, nicht im unteren Bereich des Gehäuses angeordnet sein, da sonst das Wasser ausfließen würde. Der in der Brennstoffzelle benötigte Sauerstoff kann dann durch die Öffnungen aus der Umgebungsluft bezogen werden.

Die Brennstoffzelle und auch der Elektrolyseur können luftatmende Niedertemperatur-Polymer-Elektrolytmembrane-Brennstoffzellen (PEM) sein. Diese Brennstoffzellen zeichnen sich dadurch aus, daß sie nicht nur, in ihrer eigentlichen Funktion betrieben, den benötigten Sauerstoff aus der Luft beziehen können, sondern darüber hinaus, als Elektrolyseur betrieben, das benötigte Wasser allein aus der Luftfeuchte beziehen können.

Mit dem Einsatz derartiger Brennstoffzellen wird der Vorteil erzielt, daß zum Betreiben des Elektrolyseurs kein Wasservorrat notwendig ist. Im Brennstoffzellensystem ist dann keine Flüssigkeit außer der Luftfeuchtigkeit vorhanden, so daß ein Betrieb des Systems in jeder räumlichen Lage ermöglicht wird. Ein derartiges System ist auch in kleinen tragbaren Einrichtungen, beispielsweise in Taschenlampen, einsetzbar.

Beispielsweise ist am Elektrolyseur und/oder an der Brennstoffzelle zwischen der Wasserstoff abgebenden bzw. aufnehmenden Seite einerseits und der Sauerstoff abgebenden bzw. aufnehmenden Seite andererseits ein Differenzdruckregler angeordnet, der über Ventile Druckunterschiede regelt. Mit diesem Regler kann über die Ventile eine Druckdifferenz zwischen Wasserstoff- und Luft/Sauerstoffseite vermieden werden.

Der Wasserstoffspeicher, der Elektrolyseur und/oder die Brennstoffzelle können im Unter- oder im Überdruckbereich betrieben werden. Die genannten Bauteile können auch abwechselnd im Unter- und im Überdruckbereich betrieben werden. Um einen Metallhydridspeicher im Unterdruckbereich zu betreiben, muß dieser mit einer geeigneten Legierung ausgestattet sein.

Der Elektrolyseur und die Brennstoffzelle können eine Einheit bilden, die alternierend als Elektrolyseur oder als Brennstoffzelle zu betreiben ist. Dabei kommt es auf eine Steuerung der Zufuhr von elektrischem Strom an. Es darf nämlich an der Einheit nur dann eine Spannung anliegen, wenn sie als Elektrolyseur arbeiten soll. Außerdem darf die Einheit beim Einsatz als Elektrolyseur nicht zu viel Wasser enthalten, damit sie beim Einsatz als Brennstoffzelle nicht durch das Wasser für Sauerstoff und Wasserstoff blockiert ist. Für die genannte Ausführungsform eignet sich besonders eine Vorrichtung, bei der das benötigte Wasser aus der Luftfeuchte gewonnen wird.

An die Stelle des Elektrolyseurs kann auch ein chemisch betriebener Wasserstofferzeuger treten, in dem beispielsweise organische Verbindungen so zerlegt (gecrackt) werden, daß Wasserstoff entsteht. Auch kann der benötigte Wasserstoff in jeder anderen üblichen Weise erzeugt werden. Der erforderliche Sauerstoff kann dann z.B. aus der Umgebungsluft gewonnen werden oder ebenfalls einem chemischen Prozeß entstammen.

Mit dem Brennstoffzellensystem nach der Erfindung wird insbesondere der Vorteil erzielt, daß es leicht ist und nur wenig Raum einnimmt. Es kann bei niedrigem Druck nahe beim Umgebungsdruck betrieben werden.

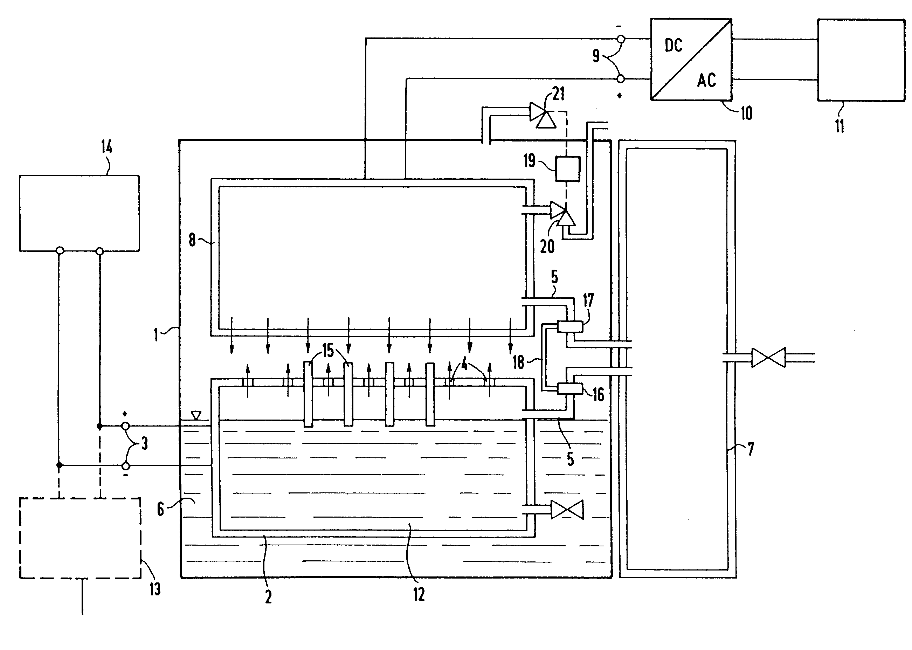

Ein Beispiel für ein Brennstoffzellensystem nach der Erfindung wird anhand der Zeichnung näher erläutert:

Die Zeichnung zeigt schematisch ein Gehäuse 1, in dem ein Elektrolyseur 2, der eine umgekehrt betriebene Brennstoffzelle ist, angeordnet ist. Dieser Elektrolyseur 2 ist mit einer elektrischen Spannungsquelle 3 verbunden und gibt über Öffnungen 4 Sauerstoff und über eine Leitung 5 Wasserstoff ab. Im Elektrolyseur 2 befindet sich Wasser 6, das ursprünglich einmal eingegeben wurde und dann beim Betrieb in einer später erwähnten Brennstoffzelle 8 reproduziert wird.

Die Leitung 5 für den Wasserstoff steht über einen Wasserstoffspeicher 7, der ein Metallhydridspeicher ist, mit der Brennstoffzelle 8 in Verbindung. Im Wasserstoffspeicher 7 wird Wasserstoff, der im Elektrolyseur 2 erzeugt worden ist, gespeichert bis er in der Brennstoffzelle 8 benötigt wird. Da dem Wasserstoffspeicher 7 trockener Wasserstoff zugeführt werden soll und andererseits die Brennstoffzelle 8 besser als sonst arbeitet, wenn der ihr zugeführte Wasserstoff feucht ist, sind in der Leitung 5 vor dem Wasserstoffspeicher 7 ein Trockner 16 und hinter dem Wasserstoffspeicher 7 ein Befeuchter 17 angeordnet. Damit das im Trockner 16 gewonnene Wasser im Befeuchter 17 eingesetzt werden kann, ist der Trockner 16 über eine Verbindungsleitung 18 mit dem Befeuchter 17 verbunden.

Den benötigten Sauerstoff nimmt die Brennstoffzelle 8 aus dem Gehäuse 1 auf. Der Sauerstoff kann auch in einem nicht gezeigten Speicher zwischengespeichert werden.

Die durch die Brennstoffzelle 8 erzeugte Gleichspannung kann, falls erforderlich, an einem Abgriff 9, z.B. über einen DC/AC-Wandler 10, einem Verbraucher 11 zugeführt werden.

Das in der Brennstoffzelle 8 gebildete Wasser fließt in den Wasservorrat des Elektrolyseurs 2. Das Wasser im Elektrolyseur 2 kann dort in einem wasserspeichernden Medium 12, z.B. in einem Schwamm, gespeichert sein. Zur besseren Einleitung von Wasser in dieses Medium 12 können an diesem Dochte 15 aus saugfähigem Material angeformt sein, die sich in Richtung auf die Wasser abgebende Brennstoffzelle 8 erstrecken.

Die Spannungsquelle 3 für den Elektrolyseur 2 kann mit einem Versorgungsnetz 13 oder auch mit einer Solarzellenanlage 14 ständig oder temporär verbunden sein. Auch kann, falls der Verbraucher 11 weniger elektrische Energie benötigt, als in der Brennstoffzelle 8 erzeugt wurde, der Überschuß dem Elektrolyseur 2 über eine nicht gezeigte elektrische Leitung zugeleitet werden.

An der Brennstoffzelle 8 ist zwischen der Wasserstoffseite und der Sauerstoffseite/Luftseite ein Differenzdruckregler 19 angeordnet. Dieser regelt Druckunterschiede über Ventile 20 und 21. Diese Ventile 20 und 21 sind in Ableitungen angeordnet, die von der Wasserstoffseite bzw. von der Sauerstoffseite/Luftseite oder vom Inneren des Luft enthaltenden Gehäuses 1 ausgehen und außerhalb des Gehäuses 1 enden.

Das in dem Gehäuse 1 untergebrachte Brennstoffzellensystem ist sehr leicht und kann anstelle von Akkumulatoren und Batterien eingesetzt werden. Dabei wird insbesondere der Vorteil erzielt, daß eine umweltfreundliche elektrische Energiequelle bereitgestellt wird. Im Gegensatz zu herkömmlichen Batterien und Akkus fallen bei einer Entsorgung keine Schwermetalle an. Im übrigen ist die Energiequelle nach der Erfindung über eine deutlich längere Zeit betriebsbereit als bekannte Akkumulatoren.

Außerdem kann das Brennstoffzellensystem als ein geschlossener oder, in bezug auf den Sauerstoff, als halboffener Prozeß betrieben werden. Des weiteren kann es in der Nähe des Umgebungsdrucks betrieben werden.

Der Elektrolyseur 2 kann das benötigte Wasser auch ausschließlich aus der Luftfeuchte erhalten. In diesem Fall und auch dann, wenn das Wasser in einem wasserspeichernden Medium 12 gespeichert ist, kann das Brennstoffzellensystem in jeder räumlichen Lage betrieben werden. Es ist dann besonders für Kleingeräte geeignet.

## Patentansprüche

1. Brennstoffzellensystem mit einem Elektrolyseur (2), dessen Wasserstoff abgebende Seite mit einer Brennstoffzelle (8) verbunden ist,
**dadurch gekennzeichnet,** daß die Brennstoffzelle (8) eine Niedertemperatur-Polymer-Elektrolytmembrane-Brennstoffzelle (PEM) ist und daß der Elektrolyseur (2) eine umgekehrt betriebene Niedertemperatur-Polymer-Elektrolytmembrane-Brennstoffzelle (PEM) ist.

2. Brennstoffzellensystem nach Anspruch 1,
**dadurch gekennzeichnet,** daß die Betriebstemperatur der PEM (8) kleiner als 100 °C ist.

3. Brennstoffzellensystem nach einem der Ansprüche 1 oder 2,
**dadurch gekennzeichnet,** daß im Elektrolyseur (2) Wasser und/oder wasserdampf (Luftfeuchte) vorhanden sind.

4. Brennstoffzellensystem nach Anspruch 3,
**dadurch gekennzeichnet,** daß im Elektrolyseur (2) ein wasserspeicherndes Medium (12) angeordnet ist.

5. Brennstoffzellensystem nach Anspruch 4,
**dadurch gekennzeichnet,** daß das wasserspeichernde Medium (12) zur Einleitung des Wassers (6) in den Elektrolyseur (2) Dochte (15) aus saugfähigem Material aufweist.

6. Brennstoffzellensystem nach einem der Ansprüche 1 bis 5,
**dadurch gekennzeichnet,** daß der Elektrolyseur (2) zur Versorgung mit elektrischer Energie mit einer Solarzellenanlage (14) verbunden ist.

7. Brennstoffzellensystem nach einem der Ansprüche 1 bis 6,
**dadurch gekennzeichnet,** daß die Wasserstoff abgebende Seite des Elektrolyseurs (2) an die Wasserstoff aufnehmende Seite der Brennstoffzelle (8) angrenzt.

8. Brennstoffzellensystem nach einem der Ansprüche 1 bis 6,
**dadurch gekennzeichnet,** daß die Wasserstoff abgebende Seite des Elektrolyseurs (2) über einen Wasserstoffspeicher (7), der zur Zwischenspeicherung von Wasserstoff dient, mit der Brennstoffzelle (8) verbunden ist.

9. Brennstoffzellensystem nach Anspruch 8,
**dadurch gekennzeichnet,** daß der Wasserstoffspeicher (7) ein Metallhydridspeicher ist.

10. Brennstoffzellensystem nach Anspruch 9,
**dadurch gekennzeichnet,** daß der Metallhydridspeicher zur Kühlung oder zur Beheizung mit einem Wasservorrat verbunden ist.

11. Brennstoffzellensystem nach einem der Ansprüche 8 bis 10,
**dadurch gekennzeichnet,** daß in Strömungsrichtung vor dem Wasserstoffspeicher (7) ein Trockner (16) angeordnet ist.

12. Brennstoffzellensystem nach einem der Ansprüche 8 bis 11,
**dadurch gekennzeichnet,** daß in Strömungsrichtung hinter dem Wasserstoffspeicher (7) ein Befeuchter (17) angeordnet ist.

13. Brennstoffzellensystem nach Anspruch 12,
**dadurch gekennzeichnet,** daß der Trockner (16) mit dem Befeuchter (17) kombiniert ist.

14. Brennstoffzellensystem nach einem der Ansprüche 1 bis 13,
**dadurch gekennzeichnet,** daß die Sauerstoff abgebende Seite des Elektrolyseurs (2) über einen Sauerstoffspeicher, der zur Zwischenspeicherung von Sauerstoff dient, mit der Brennstoffzelle (8) verbunden ist.

15. Brennstoffzellensystem nach Anspruch 14,
**dadurch gekennzeichnet,** daß der Wasserstoffspeicher (7) ein ca. doppelt so großes Volumen aufnehmen kann wie der Sauerstoffspeicher.

16. Brennstoffzellensystem nach einem der Ansprüche 1 bis 15,
**dadurch gekennzeichnet,** daß der Elektrolyseur (2) und die Brennstoffzelle (8) von einem gasdichten Gehäuse (1) umgeben sind, das als Sauerstoffspeicher dient.

17. Brennstoffzellensystem nach einem der Ansprüche 1 bis 15,
**dadurch gekennzeichnet,** daß der Elektrolyseur (2) und die Brennstoffzelle (8) von einem mit einem Lufteinlaß versehenen Gehäuse umgeben sind.

18. Brennstoffzellensystem nach einem der Ansprüche 1 bis 17,
**dadurch gekennzeichnet,** daß die Brennstoffzelle (8) und/oder der Elektrolyseur (2) luftatmende Niedertemperatur-Polymer-Elektrolytmembrane-Brennstoffzellen (PEM) sind.

19. Brennstoffzellensystem nach einem der Ansprüche 1 bis 18,
**dadurch gekennzeichnet,** daß am Elektrolyseur (2) und/oder an der Brennstoffzelle (8) zwischen der Wasserstoffseite einerseits und der Luft/Sauerstoffseite andererseits ein Differenzdruckregler (19) angeordnet ist, der über Ventile (20, 21) Druckunterschiede regelt.

20. Brennstoffzellensystem nach einem der Ansprüche 8 bis 19,
**dadurch gekennzeichnet,** daß der Wasserstoffspeicher (7), der Elektrolyseur (2) und/oder die Brennstoffzelle (8) im Unter- und/oder im Überdruckbereich betreibbar sind.

21. Brennstoffzellensystem nach Anspruch 20,
**dadurch gekennzeichnet,** daß der Wasserstoffspeicher (7), der Elektrolyseur (2) und/oder die Brennstoffzelle (8) abwechselnd im Unter- und Überdruckbereich betreibbar sind.

22. Brennstoffzellensystem nach einem der Ansprüche 1 bis 21,
**dadurch gekennzeichnet,** daß der Elektrolyseur (2) und die Brennstoffzelle (8) eine Einheit bilden, die alternierend als Elektrolyseur oder als Brennstoffzelle zu betreiben ist.
